# EUROPÄISCHE PATENTSCHRIFT

(11) **EP 4 170 451 B1**
(45) Veröffentlichungstag und Bekanntmachung des Hinweises auf die Patenterteilung: **15.10.2025**
(21) Anmeldenummer: 22203040.5
(22) Anmeldetag: 21.10.2022
(51) Int. Cl.: G05D 1/00, A01B 69/04, G07C 5/00

(54) **FERNSTEUERUNG FÜR EIN SELBSTFAHRENDES ARBEITSGERÄT**
REMOTE CONTROL FOR A SELF-PROPELLED WORKING DEVICE
TÉLÉCOMMANDE POUR UN APPAREIL DE TRAVAIL AUTOMOTEUR

(30) Priorität: 21.10.2021 DE 102021127370
(43) Veröffentlichungstag der Anmeldung: 26.04.2023
(73) Patentinhaber: Wacker Neuson Produktion GmbH & Co. KG, 85084 Reichertshofen (DE)
(72) Erfinder: LANGE, Christian, 85051 Ingolstadt (DE); LUDMANN, Ulrich, 80809 München (DE); STEGMEIR, Stephan, 86529 Schrobenhausen (DE); STEGHOFER, Felix, 80799 München (DE); BAUER, Helmut, 84405 Dorfen (DE)
(74) Vertreter: Müller Hoffmann & Partner

(56) Entgegenhaltungen:
- US-A1- 2018 024 549
- US-A1- 2020 333 778
- US-A1- 2021 150 236

## Beschreibung

Die Erfindung betrifft ein Fernsteuerungsmodul sowie ein Fernsteuerungssystem für ein selbstfahrendes Arbeitsgerät, ein selbstfahrendes Arbeitsgerät und ein Verfahren zum Fernsteuern desselben.

Es gibt eine Vielzahl von Fernsteuerungen für selbstfahrende Arbeitsgeräte, wie beispielsweise Rüttelplatten, Grabenwalzen oder Bagger, die mit einer ihr zugeordneten Fernsteuerungsvorrichtung gesteuert werden. Hierbei sind die Fernsteuerungen so ausgestaltet, dass sie ähnlich einer Fernsteuerung für Modellfahrzeuge mittels einer Funkverbindung oder einer Infrarotverbindung das Arbeitsgerät fernsteuern, wobei die Fernsteuerung durch ein manuelles Verstellen von Bedienhebeln oder Joysticks erfolgt. Ein Fernsteuerungstyp ist dabei immer einem bestimmten Maschinentyp zugeordnet oder dediziert. Da die Fernsteuerungsvorrichtung immer auf den jeweiligen Maschinentyp oder auf den Typ des Arbeitsgeräts festgelegt ist, ist diese nicht mit anderen Maschinentypen oder Arbeitsgerättypen kompatibel. Üblicherweise hat deshalb jede einzelne Maschine oder jedes einzelnes Arbeitsgerät eine einzige Fernsteuerung, die immer an genau der Maschine oder dem Arbeitsgerät verbleibt.

Da die bekannten Fernsteuerungsvorrichtungen in der Regel keine Prozessoreinheit aufweisen, sondern weitgehend auf analogen Schaltungen basieren, ist eine Änderung des Bedienkonzepts oder einer Benutzeroberfläche ohne Anpassung der Fernsteuerungsoberfläche (Anzahl und Lage der Bedienhebel oder Joysticks), und ohne Anpassung der Hardware der Fernsteuerungsvorrichtung nicht möglich. Es ist also nur ein Bedienkonzept pro Fernsteuerungsvorrichtung sowie keine Anpassung des Bedienkonzepts möglich, da die Hardware der bekannten Fernsteuerungsvorrichtungen nur mit großem Aufwand und damit verbundenen Kosten zu verändern ist.

Die US 2018/0024549 A1 betrifft ein System und ein Verfahren zur Steuerung landwirtschaftlicher Geräte, das geografische Koordinaten, Maschineneinstellungen, Maschinenposition, Wegepläne, Benutzereingaben und Geräteparameter kombiniert, um ausführbare Befehle auf der Grundlage einer Vielzahl unterschiedlicher landwirtschaftlicher Betriebsziele auf dem Feld für ein damit ausgestattetes Fahrzeug zu generieren automatische oder elektronisch gesteuerte Fortbewegungssysteme, die in der Lage sind, die Befehle zu lesen und auszuführen.

Die US 2021/0150236 A1 betrifft ein Fernsteuerungsverfahren eines Zielfahrzeugs. Bei diesem Verfahren geht es um das Erfassen eines Umgebungsbilds um das Zielfahrzeug herum, das Erkennen eines Objekts aus dem Umgebungsbild durch einen Prozessor, das Anzeigen des Umgebungsbilds in einem Mixed-Reality-Gerät und das Anzeigen des Objekts als virtuelles Bild oder reales Bild entsprechend einem Blickbereich eines fernsteuernden Fahrers, der das Mixed-Reality-Gerät trägt, Erzeugen eines Steuersignals durch den Prozessor, basierend darauf, dass ein Fahrmodul betrieben wird, und Übertragen des Steuerungssignals an das Zielfahrzeug. Hierbei können ein autonomes Fahrzeug, ein Benutzerterminal und ein Server in Verbindung mit einem Modul für künstliche Intelligenz, einem unbemannten Luftfahrzeug, einem AR-Gerät, einem VR-Gerät, oder einem 5G-fähigen Gerät stehen.

Die US 2020/0333778 A1 betrifft ein System zum ferngesteuerten Fahren eines fahrerlosen Fahrzeugs, das mit einer Fernsteuerungsstation verbunden ist. Dieses System umfasst die Implementierung von Telepräsenzterminals, optischen und akustischen Sensoren im Fahrzeug und in der Fernsteuerungsstation, um einem in der Fernsteuerungsstation anwesenden Fahrer eine bidirektionale Interaktion mit einer oder mehreren Personen in der Nähe des fahrerlosen Fahrzeugs zu ermöglichen, dank bidirektionaler optischer und akustischer Übertragung zwischen dem fahrerlosen Fahrzeug und der Fernsteuerungsstation. Das System zum ferngesteuerten Fahren eines fahrerlosen Fahrzeugs stellt außerdem ein Übertragungstool bereit, das eine Synchronisierung der Daten in der gesamten Übertragungskette ermöglicht. Dies ist auch im Güter- und Warentransportbereich sinnvoll.

Aus der EP 702 317 ist eine Fernsteuerung eines selbstfahrenden Gabelstaplers mittels eines mobilen Endgeräts wie einem Smartphone oder Tablet-PCs bekannt, bei welchem bei Überschreiten von bestimmten Randbedingungen des Gabelstaplers ein Not-Stoppvorgang implementiert ist. Die Bedienoberfläche zur Fernsteuerung des Arbeitsgeräts ist jedoch dem Maschinentyp, also dem ferngesteuerten Gabelstapler, fest zugeordnet.

Der Erfindung liegt also die Aufgabe zugrunde, ein Fernsteuerungsmodul sowie ein Fernsteuerungssystem für ein selbstfahrendes Arbeitsgerät sowie ein Verfahren zum Fernsteuern desselben anzugeben, durch welche eine universell einsetzbare Fernsteuerung einer Vielzahl von unterschiedlichen Arbeitsgerättypen durch eine Vielzahl von unterschiedlichen Endgerättypen ermöglicht wird.

Diese Aufgabe wird erfindungsgemäß durch den Gegenstand der unabhängigen Ansprüche gelöst. Vorteilhafte Ausgestaltungen und Weiterbildungen der Erfindung werden in den Unteransprüchen definiert.

Erfindungsgemäß ist ein Fernsteuerungsmodul für ein selbstfahrendes Arbeitsgerät vorgesehen, welches eine Endgerät-Datenschnittstelle zum Austausch von Daten mit einem mobilen Endgerät über ein von dem Endgerätetyp spezifisches Endgerät-Datenprotokoll sowie eine Arbeitsgerät-Datenschnittstelle zum Austausch von Daten mit dem Arbeitsgerät über ein für den Arbeitsgerätetyp spezifisches Arbeitsgerät-Datenprotokoll aufweist. Das Fernsteuerungsmodul weist ferner eine Verarbeitungseinheit auf, die dazu angepasst ist, bei einer Kopplung des mobilen Endgeräts mit dem selbstfahrenden Arbeitsgerät die Identität und den Typ des Endgeräts sowie die Identität und den Typ des Arbeitsgeräts über die jeweilige Datenschnittstelle zu ermitteln oder aus einem Datenspeicher abzurufen. Die Verarbeitungseinheit ist weiter dazu angepasst, bei einem Datenaustausch zwischen Endgerät und Arbeitsgerät die jeweiligen Datenprotokolle wechselseitig zu übersetzen. Schließlich ist die Verarbeitungseinheit dazu angepasst, von dem Endgerät zu dem Arbeitsgerät Maschinensteuerdaten und von dem Arbeitsgerät zu dem Endgerät Maschinenstatusdaten zu übertragen. Um die Benutzeroberflächen entsprechend der unterschiedlichen Bedienkonzepte der unterschiedlichen Arbeitsgerättypen anpassen zu können, sendet die Verarbeitungseinheit in Abhängigkeit von der Identität und/oder des Typs des Endgeräts und/oder des Arbeitsgeräts Kenndaten an das mobile Endgerät, auf Basis dessen unterschiedliche vorbestimmte Benutzeroberflächen auf dem mobilen Endgerät bereitgestellt werden.

Es ist also ein Fernsteuerungsmodul für ein selbstfahrendes Arbeitsgerät vorgesehen, das unabhängig vom Arbeitsgerätetyp oder Endgerätetyp eine Fernsteuerung des selbstfahrenden Arbeitsgeräts durch das mobile Endgerät ermöglicht. Das Fernsteuerungsmodul gemäß der Erfindung identifiziert hierfür bei der Kopplung mit dem mobilen Endgerät und dem selbstfahrenden Arbeitsgerät den entsprechenden Typ des Endgeräts und des Arbeitsgeräts und vermittelt bei der Fernsteuerung und bei der Übertragung von Maschinenstatusdaten zwischen den unterschiedlichen Daten-Protokollen. Ferner übermittelt das Fernsteuerungsmodul dem mobilen Endgerät den Arbeitsgerätetyp, so dass eine Benutzeroberfläche oder GUI (Graphical User Interface) entsprechend an den Arbeitsgerätetyp angepasst werden kann. So werden beispielsweise unterschiedliche Bedienkonzepte bei unterschiedlichen Arbeitsgerätetypen angezeigt, während hingegen andere Bedienkonzepte nicht angezeigt oder ausgeblendet werden. Somit wird also durch das erfindungsgemäße Fernsteuerungsmodul eine universelle Fernsteuerung geschaffen, die einfach, beispielsweise über Smartphone oder Tablet-PC, zu bedienen ist und die ferner die Fernsteuerung von unterschiedlichen Arbeitsgeräten mittels eines einzigen mobilen Endgeräts ermöglicht.

Da bei dem Fernsteuerungsmodul gemäß der Erfindung keine analoge Fernsteuerung durch manuelle Bedienhebel oder Joysticks, sondern unterschiedliche Steuerungskonzepte mittels Gestensteuerung auf einem Touchscreen erfolgen, ist es von Vorteil, wenn die Verarbeitungseinheit dazu angepasst ist, von dem Endgerät empfangene Maschinensteuerdaten zu verarbeiten und an das Arbeitsgerät angepasste Maschinensteuerdaten zu dem Arbeitsgerät zu übertragen.

Für eine vereinfachte Fernsteuerung des Arbeitsgeräts, wobei der Benutzer sich nicht in das Koordinatensystem des sich bewegenden Arbeitsgeräts hineinversetzen muss, sondern auf der Benutzeroberfläche unabhängig von der Orientierung des Arbeitsgeräts und des mobilen Endgeräts mittels Fingersteuerung eine Fahrtrichtung befehlen kann, die mit der Gestenrichtung des Fingers auf der Benutzeroberfläche übereinstimmt, ist es zweckmäßig, wenn die Verarbeitungseinheit ferner dazu angepasst ist, Lagedaten des mobilen Endgeräts und des selbstfahrenden Arbeitsgeräts so miteinander zu verrechnen, dass die aktuelle Orientierung des realen Arbeitsgeräts mit der aktuellen Orientierung des virtuellen Arbeitsgeräts auf einer Benutzeroberfläche des mobilen Endgeräts korreliert.

Hierbei ist es vorteilhaft, wenn die Verarbeitungseinheit aufgrund der miteinander verrechneten Lagedaten des mobilen Endgeräts und des selbstfahrenden Arbeitsgeräts von dem mobilen Endgerät empfangene Maschinensteuerungsdaten so modifiziert, dass eine richtungskompatible Steuerung des Arbeitsgeräts durch das Endgerät ermöglicht wird.

Für eine einfache Bedienung des selbstfahrenden Arbeitsgeräts durch das mobile Endgerät durch ein einfaches Bewegen des mobilen Endgeräts ist es von Vorteil, wenn die Verarbeitungseinheit Maschinensteuerungsdaten des Endgeräts so verarbeitet, dass eine Bewegung des Endgeräts im Raum entsprechend einer Neige- und Kipp-Steuerung in Fahrbefehlsdaten des Arbeitsgeräts umgesetzt werden. Für eine intuitive, spielerische und richtungskompatible Steuerung des Arbeitsgeräts durch das Endgerät ist es zweckmäßig, wenn die Verarbeitungseinheit Maschinensteuerungsdaten des Endgeräts so verarbeitet, dass eine Bewegung eines Fingers in einer Benutzeroberfläche auf einem Touchscreen des Endgeräts entsprechend einer Ein-Finger-Steuerung in Fahrbefehlsdaten des Arbeitsgeräts umgesetzt werden.

Um neben der Orientierung des Endgeräts und des Arbeitsgeräts noch weitere Lageinformationen wie den Abstand zwischen Bediener und Arbeitsgerät nutzen zu können, um beispielsweise einen maximalen Abstand oder einen minimalen Abstand mit entsprechendem Notstopp zu implementieren, ist es vorteilhaft, wenn die Verarbeitungseinheit ferner dazu angepasst ist, Lagedaten des mobilen Endgeräts und des selbstfahrenden Arbeitsgeräts so miteinander zu verrechnen, dass in Abhängigkeit der relativen Lage, insbesondere des Abstandes und/oder der relativen Orientierung zwischen Endgerät und Arbeitsgerät Maschinensteuerdaten von dem Endgerät modifiziert werden.

Erfindungsgemäß ist weiter ein selbstfahrendes Arbeitsgerät vorgesehen, welches eine Arbeitsmaschineneinheit zur Durchführung einer Arbeitstätigkeit, eine interne Maschinensteuerungseinheit zur Steuerung der Arbeitsmaschineneinheit mittels Maschinensteuerdaten und zum Ermitteln von Maschinenstatusdaten der Arbeitsmaschineneinheit, sowie ein Fernsteuerungsmodul gemäß der Erfindung aufweist.

Darüber hinaus ist erfindungsgemäß ein Fernsteuerungssystem für ein selbstfahrendes Arbeitsgerät vorgesehen, welches ein mobiles Endgerät mit einer Benutzeroberfläche zur Darstellung von Maschinenstatusdaten sowie zur Eingabe von Maschinensteuerdaten, ein selbstfahrendes Arbeitsgerät mit einer internen Maschinensteuerungseinheit zum Empfangen von Maschinensteuerdaten und zum Senden von Maschinenstatusdaten, sowie ein Fernsteuerungsmodul gemäß der Erfindung aufweist.

Um eine richtungskompatible Steuerung des Arbeitsgeräts durch das Endgerät zu ermöglichen, ist es von großem Vorteil, wenn das Fernsteuerungssystem eine Lageerfassungseinheit zur Bestimmung der räumlichen Lage des selbstfahrenden Arbeitsgeräts aufweist, wobei die Lageerfassungseinheit dazu angepasst ist, Lagedaten des selbstfahrenden Arbeitsgeräts und/oder des mobilen Endgeräts an das Fernsteuerungsmodul zu übermitteln.

Bei einer Fernsteuerung und einer Lageerfassung durch ein in dem Arbeitsgerät verbauten GPS-System ist es zweckmäßig, wenn das Fernsteuerungsmodul und die Lagererfassungseinheit in dem selbstfahrenden Arbeitsgerät verbaut sind, wobei die Endgerät-Datenschnittstelle drahtlos ist und die Arbeitsgerät-Datenschnittstelle eine drahtgebundene Kommunikation mit der Maschinensteuerungseinheit des Arbeitsgeräts ermöglicht.

Bei einer Fernsteuerung und Lagebestimmung des Arbeitsgeräts durch ein UWB-(Ultra Wide Band)-RTLS-(Real Time Locating System)-System ist es von Vorteil, wenn das Fernsteuerungsmodul und die Lagererfassungseinheit in einem separaten Ortungsmodul zu dem selbstfahrenden Arbeitsgerät vorgesehen sind, wobei die Endgerät-Datenschnittstelle drahtlos ist und die Arbeitsgerät-Datenschnittstelle eine drahtlose Kommunikation mit der Maschinensteuerungseinheit des Arbeitsgeräts ermöglicht.

Erfindungsgemäß ist ferner ein Verfahren zum Fernsteuern eines selbstfahrenden Arbeitsgeräts durch ein mobiles Endgerät vorgesehen, welches die folgenden Schritte aufweist. So wird bei dem erfindungsgemäßen Verfahren zunächst eine Endgerät-Datenschnittstelle zum Austausch von Daten mit dem mobilen Endgerät über ein für den Endgerätetyp spezifisches Endgerät-Datenprotokoll bereitgestellt. Ferner wird eine Arbeitsgerät-Datenschnittstelle zum Austausch von Daten mit dem Arbeitsgerät über ein für den Arbeitsgerätetyp spezifisches Arbeitsgerät-Datenprotokoll bereitgestellt. Bei einem Koppeln des mobilen Endgeräts mit dem selbstfahrenden Arbeitsgerät wird die Identität und der Typ des fernsteuernden Endgeräts sowie die Identität und der Typ des ferngesteuerten Arbeitsgeräts über die jeweilige Datenschnittstelle ermittelt oder aus einem Datenspeicher abgerufen. Danach erfolgt ein wechselseitiges Übersetzen der jeweiligen Datenprotokolle bei einem Datenaustausch zwischen Endgerät und Arbeitsgerät, wobei Maschinensteuerdaten von dem Endgerät zu dem Arbeitsgerät und Maschinenstatusdaten von dem Arbeitsgerät zu dem Endgerät übertragen werden.

Vorteilhafterweise kann das erfindungsgemäße Verfahren auch den Schritt des miteinander Verrechnens der Lagedaten des mobilen Endgeräts und des selbstfahrenden Arbeitsgeräts aufweisen, derart, dass die aktuelle Orientierung des realen Arbeitsgeräts mit der aktuellen Orientierung des virtuellen Arbeitsgeräts auf einer Benutzeroberfläche des mobilen Endgeräts korreliert.

Hierbei ist es vorteilhaft, wenn aufgrund der miteinander verrechneten Lagedaten des mobilen Endgeräts und des selbstfahrenden Arbeitsgeräts von dem mobilen Endgerät empfangene Maschinensteuerungsdaten so modifiziert werden, dass eine richtungskompatible Steuerung des Arbeitsgeräts durch das Endgerät ermöglicht wird.

Hierbei ist es von Vorteil, wenn Maschinensteuerungsdaten des Endgeräts so verarbeitet werden, dass eine Bewegung des Endgeräts im Raum entsprechend einer Neige- und Kipp-Steuerung in Fahrbefehlsdaten des Arbeitsgeräts umgesetzt werden.

Ferner ist es zweckmäßig, wenn Maschinensteuerungsdaten des Endgeräts so verarbeitet werden, dass eine Bewegung eines Fingers in einer Benutzeroberfläche auf einem Touchscreen des Endgeräts entsprechend einer Ein-Finger-Steuerung in Fahrbefehlsdaten des Arbeitsgeräts umgesetzt wird.

Darüber hinaus ist es vorteilhaft, wenn Lagedaten des mobilen Endgeräts und des selbstfahrenden Arbeitsgeräts so miteinander verrechnet werden, dass in Abhängigkeit der relativen Lage, insbesondere des Abstandes und/oder der relativen Orientierung zwischen Endgerät und Arbeitsgerät Maschinensteuerdaten von dem Endgerät modifiziert werden.

Die obige Aufgabe wird auch gelöst durch ein Computerprogramm umfassend Befehle, die bei der Ausführung durch ein mobiles Endgerät und/oder ein Fernsteuerungsmodul dieses veranlassen, das oben beschriebene Verfahren auszuführen.

Die obige Aufgabe wird auch gelöst durch ein computerlesbares Medium, welches Befehle umfasst, die bei der Ausführung durch ein mobiles Endgerät und/oder ein Fernsteuerungsmodul dieses veranlassen, das obige Verfahren auszuführen.

Schließlich ist erfindungsgemäß eine Vorrichtung zur Datenverarbeitung vorgesehen, die Mittel zur Ausführung des erfindungsgemäßen Verfahrens umfasst.

Die Erfindung wird im Folgenden beispielsweise anhand der Zeichnung näher erläutert. Es zeigen:
- **Fig. 1**: ein Blockschaltbild eines Fernsteuerungssystems gemäß einem Ausführungsbeispiel der Erfindung,
- **Fig. 2**: ein Flussdiagramm eines Verfahrens zum Fernsteuern eines selbstfahrenden Arbeitsgeräts gemäß einem Ausführungsbeispiel der Erfindung,
- **Fig. 3**: eine stark vereinfachte schematische Ansicht eines Fernsteuerungssystems mit einer GPS-Lageerfassung des Arbeitsgeräts gemäß einem Ausführungsbeispiel der Erfindung,
- **Fig. 4**: eine stark vereinfachte schematische Ansicht eines Fernsteuerungssystems mit einer UWB-RTLS-Lageerfassung des Arbeitsgeräts gemäß einem Ausführungsbeispiel der Erfindung,
- **Fig. 5A bis 5C**: Benutzeroberflächen auf einem mobilen Endgerät mit unterschiedlichen Bedienkonzepten gemäß verschiedenen Ausführungsbeispielen der Erfindung, und
- **Fig. 6**: eine schematische Ansicht zur Illustration einer universellen Fernsteuerung durch das Fernsteuerungssystem gemäß der Erfindung.

In den verschiedenen Figuren der Zeichnung sind einander entsprechende Bauelemente mit gleichen Bezugszeichen versehen.

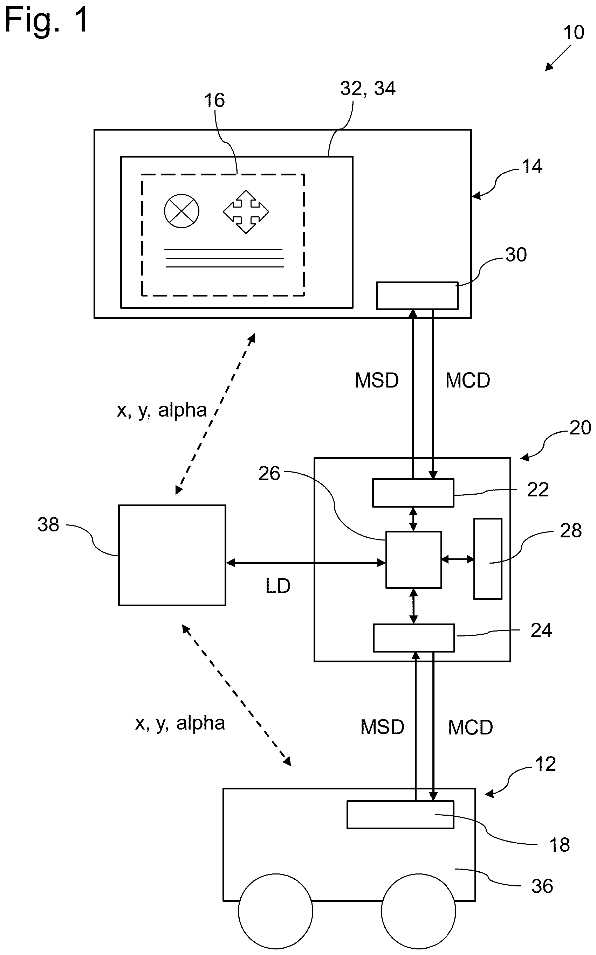

Fig. 1 zeigt eine schematische Blockansicht eines Fernsteuerungssystems 10 für ein selbstfahrendes Arbeitsgerät 12 gemäß der Erfindung. Das Fernsteuerungssystem 10 weist hierbei ein mobiles Endgerät 14 mit einer Benutzeroberfläche 16 zur Darstellung von Maschinenstatusdaten MSD sowie zur Eingabe von Maschinensteuerdaten MCD auf. Das selbstfahrende Arbeitsgerät 12 weist eine interne Maschinensteuerungseinheit 18 zum Empfangen von Maschinensteuerdaten MCD und zum Senden von Maschinenstatusdaten MSD auf.

Das erfindungsgemäße Fernsteuerungssystem 10 umfasst ferner ein Fernsteuerungsmodul 20, durch welches eine Fernsteuerung des Arbeitsgeräts 12 mittels des mobilen Endgeräts 14 unabhängig vom Endgerätetyp und/oder Arbeitsgerätetyp ermöglicht wird. Das Fernsteuerungsmodul 20 weist hierfür eine Endgerät-Datenschnittstelle 22 zum Austausch von Daten mit dem mobilen Endgerät 14 über ein für den Endgerätetyp spezifisches Endgerät-Datenprotokoll sowie eine Arbeitsgerät-Datenschnittstelle 24 zum Austausch von Daten mit dem Arbeitsgerät 12 über ein für den Arbeitsgerätetyp spezifisches Arbeitsgerät-Datenprotokoll auf. Das Fernsteuerungsmodul 20 gemäß der Erfindung weist ferner eine Verarbeitungseinheit 26 auf, die dazu angepasst ist, bei einer Kopplung des mobilen Endgeräts 14 mit dem selbstfahrenden Arbeitsgerät 12 die Identität und den Typ des Endgeräts 14 sowie die Identität und den Typ des Arbeitsgeräts 12 über die jeweilige Datenschnittstelle 22, 24 zu ermitteln oder aus einem Datenspeicher 28 abzurufen. Die Verarbeitungseinheit 26 ist ferner dazu angepasst, bei einem Datenaustausch zwischen Endgerät 14 und Arbeitsgerät 12 die jeweiligen Datenprotokolle wechselseitig zu übersetzen und von dem Endgerät 14 zu dem Arbeitsgerät 12 Maschinensteuerdaten MCD und von dem Arbeitsgerät 12 zu dem Endgerät Maschinenstatusdaten MSD zu übertragen.

Das mobile Endgerät 14 kommuniziert mit der Endgerät-Datenschnittstelle 22 über eine Fernsteuerungsmodul-Datenschnittstelle 30, um mit der Endgerät-Datenschnittstelle 22 des Fernsteuerungsmoduls 20 Daten wie beispielsweise die Maschinensteuerdaten MCD und die Maschinenstatusdaten MSD auszutauschen. Das mobile Endgerät 14 kann als Smartphone, als Tablet-PC oder als Laptop ausgestaltet sein, wobei jedoch jedwedes Gerät auch umfasst sein soll, welches dazu angepasst ist, eine drahtlose oder drahtgebundene Datenkommunikation mit dem Fernsteuerungsmodul 20 sowie eine Benutzeroberfläche 16 bereitzustellen, über die ein Benutzer zumindest Maschinensteuerdaten MCD an das Fernsteuerungsmodul 20 senden und vorzugsweise Maschinenstatusdaten MSD empfangen und auf der Benutzeroberfläche anzeigen oder entsprechend verarbeiten kann.

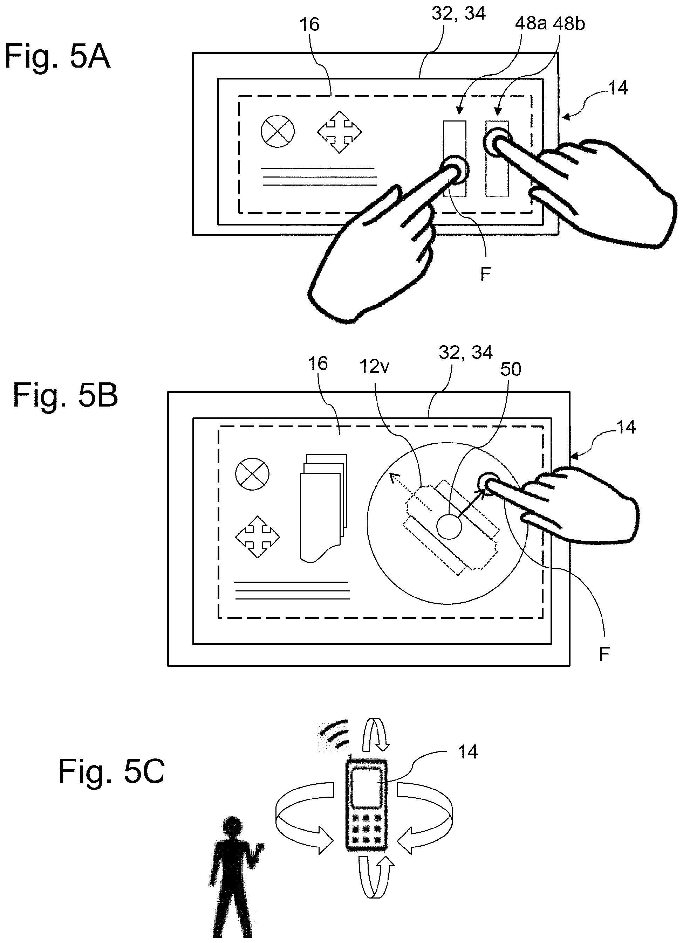

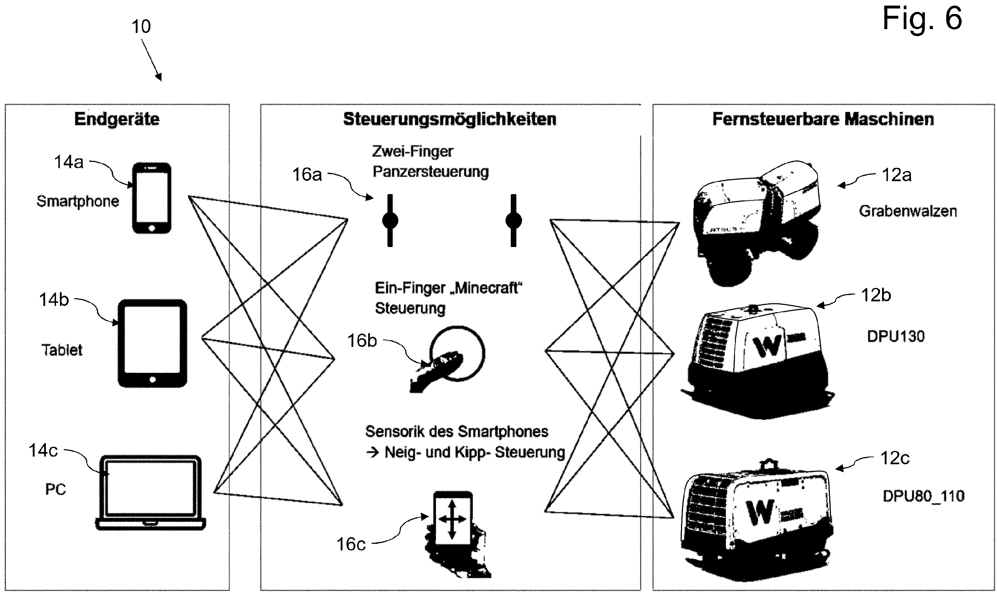

Für den Fall, dass das mobile Endgerät 14 als Smartphone, Tablet-PC oder Laptop ausgestaltet ist, wird die Benutzeroberfläche 16 durch ein entsprechendes Computerprogramm oder durch eine Applikation (App) auf dem mobilen Endgerät 14 erzeugt, wobei das mobile Endgerät 14 hierfür einen Bildschirm 32 sowie eine Eingabevorrichtung 34 aufweist. Die Eingabevorrichtung 34 kann im Falle einer Ausgestaltung als Touchscreen bei einem Smartphone oder einem Tablet-PC mit dem Bildschirm 32 zusammenfallen, wodurch eine einfache und intuitive Befehlseingabe durch einen Benutzer mittels Fingergestik auf dem berührungsempfindlichen Touchscreen 32, 34 ermöglicht wird. Die unterschiedlichen Bedienkonzepte für unterschiedliche Arbeitsgeräte 12 werden im Folgenden noch genauer bei der Beschreibung der Fig. 5A bis 5C und Fig. 6 beschrieben werden.

Die Übersendung der Maschinensteuerdaten MCD sowie das optionale Empfangen der Maschinenstatusdaten MSD erfolgt durch die Fernsteuerungs-Datenschnittstelle 30 des mobilen Endgeräts 14 über ein für den Endgerätetyp spezifisches Endgerät-Datenprotokoll. So kann bei einer drahtlosen Kommunikation zwischen dem mobilen Endgerät 14 und dem Fernsteuerungsmodul 20 als Endgerät-Datenprotokoll ein WLAN-Protokoll, ein Bluetooth-Protokoll oder ein übliches Mobilfunk-Protokoll wie 3G, 4G oder 5G verwendet werden. Gerade bei den zukünftigen Mobilfunk-Standards ab dem 5G-Standard ermöglichen niedrige Latenzzeiten eine Quasi-Echtzeitfernsteuerung von Arbeitsgeräten 12 durch ein mobiles Endgerät 14 über eine Mobilfunkverbindung, welche über ein bekanntes Mobilfunknetzwerk läuft. Es ist jedoch auch möglich, dass die Kommunikation zwischen mobilem Endgerät 14 und Fernsteuerungsmodul 20 über eine Infrarotschnittstelle oder über eine herstellerspezifische Funkschnittstelle läuft. So ist es beispielsweise vorstellbar, dass die Fernsteuerungs-Datenschnittstelle 30 als separates Modul ausgebildet ist, das einerseits mit dem mobilen Endgerät 14 über eine USB-Schnittstelle oder eine Bluetooth-Schnittstelle kommuniziert und andererseits mit der Endgeräte-Datenschnittstelle 22 des Fernsteuerungsmoduls 20 über ein herstellerspezifisches Datenprotokoll und über eine herstellerspezifische Datenverbindung wie eine Funkverbindung, eine Infrarot-Verbindung oder eine drahtgebundene Verbindung kommuniziert.

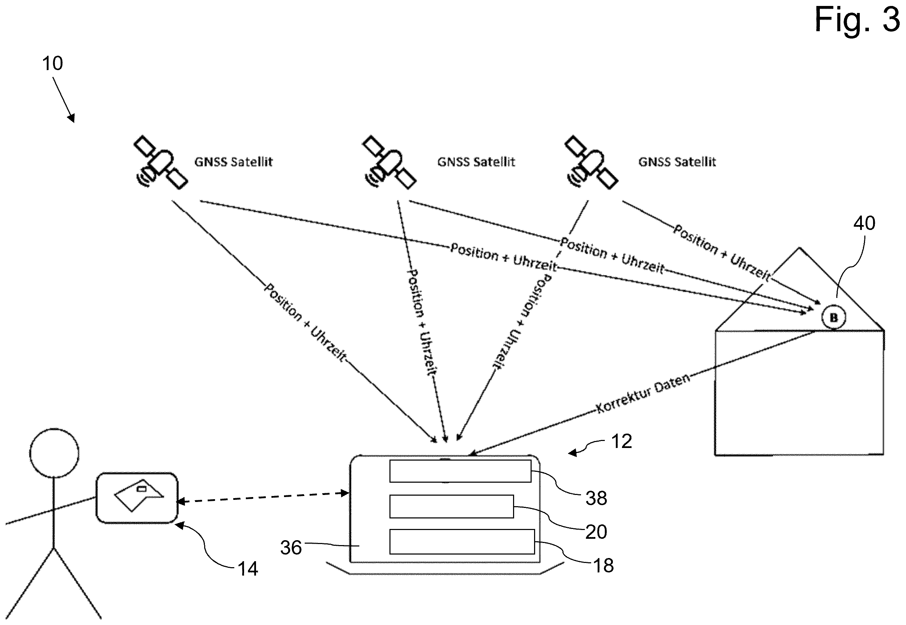

Das selbstfahrende Arbeitsgerät 12 weist eine Arbeitsmaschineneinheit 36 zur Durchführung einer Arbeitstätigkeit sowie die interne Maschinensteuerungseinheit 18 zur Steuerung der Arbeitsmaschineneinheit 36 mittels der Maschinensteuerdaten MCD und zum Ermitteln von Maschinenstatusdaten MSD der Arbeitsmaschineneinheit 36 auf. Das Fernsteuerungsmodul 20 kann in dem selbstfahrenden Arbeitsgerät 12 fest verbaut sein, wie noch genauer unter Bezugnahme auf die Fig. 3 behandelt werden wird. Das selbstfahrende Arbeitsgerät 12 ist vorzugsweise als Baumaschine wie beispielsweise eine Rüttelplatte, eine Grabenwalze oder ein Bagger ausgestaltet, wobei jedoch die Anwendung der Erfindung für ferngesteuerte Rüttelplatten und/oder Grabenwalzen bevorzugt ist. Die Erfindung soll jedoch nicht hierauf beschränkt sein, sondern es sollen alle selbstfahrenden Arbeitsgeräte umfasst sein, die eine wie auch immer geartete Arbeit oder Bautätigkeit oder einen Transport von Bau- oder Arbeitsmaterialien durchführen und welche fernsteuerbar sind.

Die Fernsteuerung bzw. der Datenaustausch zwischen der Arbeitsgerät-Datenschnittstelle 24 und der internen Maschinensteuerungseinheit 18 erfolgt über ein für den Arbeitsgerätetyp spezifisches Arbeitsgerät-Datenprotokoll. So kann beispielsweise bei Arbeitsgeräten 12, die bereits eine Fernsteuerung durch eine bekannte Fernsteuerungsvorrichtung ermöglichen, das Arbeitsgerät-Datenprotokoll dem bereits existierenden Fernsteuerungsprotokoll angeglichen sein, um eine einfache Nachrüstbarkeit eines bereits fernsteuerbaren Arbeitsgeräts 12 mittels des erfindungsgemäßen Fernsteuerungsmoduls 20 zu erleichtern. Für den Fall, dass das Fernsteuerungsmodul 20 fest in dem selbstfahrenden Arbeitsgerät 12 verbaut ist, kann hierbei die Funk- oder Infrarot-Verbindung durch eine drahtgebundene Datenverbindung ersetzt werden, wobei jedoch das Übertragungs- oder Fernsteuerungs-Protokoll gleich bleibt. Als Beispiel für existierende Arbeitsgerät-Datenprotokolle sollen beispielsweise das Fernsteuerungsprotokoll SC2+ für die Rüttelplatte Modell DPU80, das Fernsteuerungsprotokoll SC2 (DPU) für die Rüttelplatte Modell DPU130 oder das Fernsteuerungsprotokoll SC2 (RT) für die Grabenwalze Modell RT der Anmelderin genannt werden.

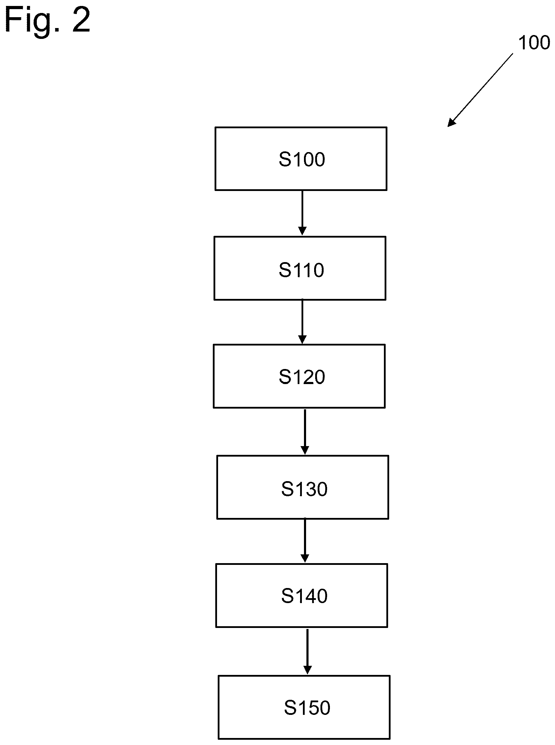

Das Fernsteuerungsmodul 20 ermöglicht also durch die Umsetzung der Datenprotokolle von dem mobilen Endgerät 14 zu dem selbstfahrenden Arbeitsgerät 12 und von dem selbstfahrenden Arbeitsgerät 12 zu dem mobilen Endgerät 14 eine universell einsetzbare Fernsteuerung, wobei das Fernsteuerungsmodul 20 die Verarbeitungseinheit 26, welche als zentrale Prozessoreinheit ausgestaltet sein kann, aufweist, um durch Ausführen eines Computerprogramms oder einer Applikation das folgende erfindungsgemäße Verfahren 100 zum Fernsteuern des selbstfahrenden Arbeitsgeräts 12 durch das mobile Endgerät 14 durchzuführen, wie in Fig. 2 gezeigt ist.

So wird in den Schritten S100 und S110 die Endgerät-Datenschnittstelle 22 zum Austausch von Daten mit dem mobilen Endgerät 14 über ein für das Endgerät spezifisches Endgerät-Datenprotokoll sowie eine Arbeitsgerät-Datenschnittstelle 16 zum Austausch von Daten mit dem Arbeitsgerät 12 über ein für den Arbeitsgerättyp spezifisches Arbeitsgerät-Datenprotokoll bereitgestellt. In dem Schritt S120 wird dann das mobile Endgerät 14 mit dem selbstfahrenden Arbeitsgerät 12 durch das Fernsteuerungsmodul 20 gekoppelt. Die Verarbeitungseinheit 26 des Fernsteuerungsmoduls 20 ermittelt dann in einem Schritt S130 die Identität und den Typ des fernsteuernden Endgeräts 14 sowie die Identität und den Typ des ferngesteuerten Arbeitsgeräts 12 über die jeweilige Datenschnittstelle 22, 24, oder ruft diese Daten aus dem Datenspeicher 28 ab. So kann beispielsweise für den Fall, dass das Fernsteuerungsmodul 20 fest in dem Arbeitsgerät 12 verbaut ist, aufgrund der gleichbleibenden Identität und Typs des Arbeitsgeräts 12 nur die jeweilige Identität und der Typ des Endgeräts 14 ermittelt werden. Die Ermittlung der Identität und des Typs des Endgeräts 14 erfolgt durch eine Kommunikation des Fernsteuerungsmoduls 20 mit der auf dem Endgerät 14 laufenden Applikation oder Computerprogramm, welches die Benutzeroberfläche 16 für eine Bedienperson erzeugt. Um zu verhindern, dass das Arbeitsgerät 12, welches als Grabenwalze oder Rüttelplatte ein enormes Gefährdungspotential besitzt, durch nicht autorisierte Benutzer ferngesteuert wird, kann der Schritt S130 des Ermittelns der Identität und des Typs des Endgeräts 14 auch einen Authentifizierungsvorgang aufweisen, in welchem die Berechtigung und Identität des fernsteuernden Benutzers, dem ein spezifisches Endgerät zugeordnet ist, überprüft wird. Nachdem in Schritt S130 die Identität und der Typ des Endgeräts 14 sowie die Identität und der Typ des Arbeitsgeräts 12 ermittelt worden sind, übersetzt dann die Verarbeitungseinheit 26 des Fernsteuerungsmoduls 20 wechselseitig die jeweiligen Datenprotokolle bei dem Datenaustausch zwischen dem Endgerät 14 und dem Arbeitsgerät 12 und überträgt in einem Schritt S150 die Maschinensteuerdaten MCD von dem Endgerät 14 zu dem Arbeitsgerät 12 und Maschinenstatusdaten MSD von dem Arbeitsgerät 12 zu dem Endgerät 14.

Wie bereits eingangs erwähnt, kann dieses erfindungsgemäße Verfahren durch ein Computerprogramm oder eine Applikation ausgeführt werden, welches Befehle umfasst, die bei der Ausführung des Programms durch die Verarbeitungseinheit 26, oder gegebenenfalls auch teilweise durch das mobile Endgerät 14, diese veranlassen, das Verfahren mit den Schritten S100 bis S150 auszuführen. Die Fernsteuerung durch das mobile Endgerät 14 ist also als Software ausgebildet, die auf unterschiedlichen mobilen Endgeräten 14 laufen kann, beispielsweise als App auf einem Smartphone. Das Fernsteuerungsmodul 20 kommuniziert dabei mit der Fernsteuerungssoftware des mobilen Endgeräts 14 und kann die Steuersignale MCD der Steuersoftware auf dem mobilen Endgerät 14 entsprechend dem jeweiligen Maschinentyp des Arbeitsgeräts 12 verarbeiten. Hierzu wird eine eindeutige Identifizierung der Maschine oder des Arbeitsgeräts 12 sowie des Maschinentyps oder Arbeitsgerätetyps und der Fernsteuerungssoftware auf dem mobilen Endgerät 14 durchgeführt, um einerseits die Software auf das zu steuernde Arbeitsgerät 12 einzustellen und auch zumindest zeitweilig eine eindeutige Zuordnung bzw. Kopplung von Fernsteuerungssoftware auf dem mobilen Endgerät 14 und Arbeitsgerät 12 zu erreichen.

Insbesondere ist es vorteilhaft, wenn die Kommunikation zwischen mobilen Endgerät 14 und dem Arbeitsgerät 12 über das Fernsteuerungsmodul 20 in beiden Richtungen möglich oder bidirektional ist, also von dem Arbeitsgerät 12 zu dem mobilen Endgerät 14 neben dem Empfangen von Maschinensteuerdaten MCD auch ein Senden von Maschinenstatusdaten MSD an das mobile Endgerät 14 möglich ist. Es ist also keine dauerhafte eindeutige Zuordnung zwischen der Steuerungssoftware auf dem mobilen Endgerät 14 und dem Arbeitsgerät 12 notwendig. Wenn die Arbeit mit einem Arbeitsgerät 12a beendet ist, kann die Fernsteuerungssoftware auf dem mobilen Endgerät 14 anschließend mit einem Arbeitsgerät 12b gekoppelt werden, wie beispielsweise in Fig. 6 gezeigt ist. Ferner kann auch das Bedienkonzept verändert werden, wie in Fig. 5A bis 5C gezeigt ist. Da die Steuerung durch das mobile Endgerät 14 ohnehin durch eine Software ausgebildet ist, kann ein Bediener aus verschiedenen Steuersystematiken auswählen, wie beispielsweise einer Panzersteuerung, einer Minecraft-Steuerung oder einer Steuerung mittels Sensoren im mobilen Endgerät 14.

Das Fernsteuerungssystem 10 kann ferner eine Lageerfassungseinheit 38 zur Bestimmung der räumlichen Lage des selbstfahrenden Arbeitsgeräts 12 und/oder des mobilen Endgeräts 14 umfassen, wobei die Lageerfassungseinheit 38 dazu angepasst ist, Lagedaten des selbstfahrenden Arbeitsgeräts 12 an das Fernsteuerungsmodul 20 zu übermitteln.

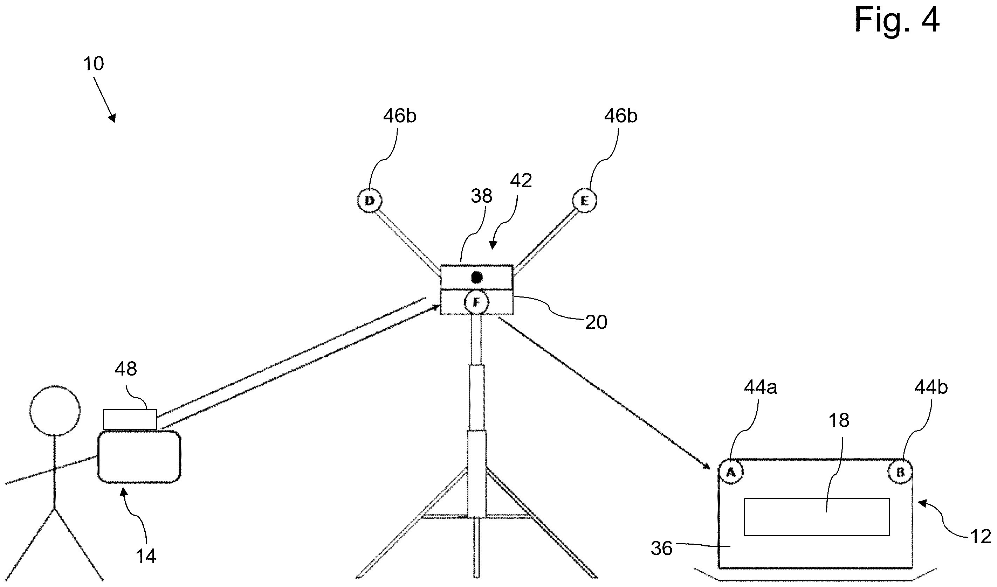

In den Fig. 3 und 4 sind konkrete Ausgestaltungen einer Lageerfassungseinheit 38 in Verbindung mit dem Fernsteuerungssystem 10 gezeigt.

So ist bei dem Ausführungsbeispiel in Fig. 3 das Fernsteuerungsmodul 20 und die Lageerfassungseinheit 38 in dem selbstfahrenden Arbeitsgerät 12 fest verbaut, wobei die Endgerät-Datenschnittstelle 22 zu dem mobilen Endgerät 14 drahtlos ist und die Arbeitsgerät-Datenschnittstelle 24 eine interne drahtgebundene Kommunikation mit der Maschinensteuerungseinheit 18 des Arbeitsgeräts 12 ermöglicht. Bei dem in Fig. 3 gezeigten Ausführungsbeispiel erfolgt eine Erfassung der Lage, also der Position und Orientierung auf einer Erdoberfläche, mittels GPS-Ortung. Hierbei kann die Bestimmung der Position, also der geographischen Koordinaten durch GPS erfolgen, während die azimutale Orientierung alpha des Arbeitsgeräts 12 durch einen Kompass oder Nordsucher bestimmt wird. Zusätzlich kann eine Korrektur der durch die Satelliten ermittelten Positionsdaten durch eine Verbindung mit einem an einem feststehenden Objekt wie einem Haus montierten GPS-Empfänger 40 erfolgen. Somit kann also die Lageerfassungseinheit 38 sehr genaue Lagedaten LD an das Fernsteuerungsmodul 20 übersenden, wobei die Verarbeitungseinheit 26 des Fernsteuerungsmoduls 20 diese Lagedaten entsprechend verarbeitet, um Maschinensteuerdaten MCD entsprechend zu modifizieren, wie noch erläutert werden wird.

In Fig. 4 ist ein weiteres Ausführungsbeispiel eines Fernsteuerungssystems 10 gezeigt, bei welchem das Fernsteuerungsmodul 20 und die Lageerfassungseinheit 38 in einem separaten Ortungsmodul 42 zu dem selbstfahrenden Arbeitsgerät 12 vorgesehen sind. Bei dieser Ausgestaltung des Fernsteuerungssystems 10 ist die Endgerät-Datenschnittstelle 22 des Fernsteuerungsmoduls 20 drahtlos, um mit dem mobilen Endgerät 14 über ein für den Endgerätetyp spezifisches Endgerät-Datenprotokoll Daten, insbesondere Maschinensteuerdaten MCD und Maschinenstatusdaten MSD, auszutauschen. Ferner ist die Arbeitsgerät-Datenschnittstelle 24 des Fernsteuerungsmoduls 20 ebenfalls drahtlos, um eine drahtlose Kommunikation mit der Maschinensteuerungseinheit 18 des Arbeitsgeräts 12 zu ermöglichen. Für die Fernsteuerung des Arbeitsgeräts 12 durch das Fernsteuerungsmodul 20 kann hierbei ein bereits bekanntes Arbeitsgerät-Datenprotokoll zur Fernsteuerung des Arbeitsgeräts 12 verwendet werden. Es ist jedoch bevorzugt, dass die Arbeitsgerät-Datenschnittstelle 24 des Fernsteuerungsmoduls 20 eine bidirektionale Datenkommunikation mit der Maschinensteuerungseinheit 12 ermöglicht, damit Maschinenstatusdaten MSD von dem Arbeitsgerät 12 zu dem Fernsteuerungsmodul 20 gesendet werden können.

Bei dem in Fig. 4 gezeigten Ausführungsbeispiel des Fernsteuerungssystems 10 ist die Lageerfassungseinheit 38 als UWB-RTLS-System ausgebildet, wobei mittels einer UWB-(Ultra Wide Band-)Lokalisierung eine sehr präzise und stabile Ortung des Arbeitsgeräts 12 ermöglicht ist. So ist eine Ortung mittels eines UWB-RTLS-Systems wesentlich genauer als eine GPS-Lokalisierung oder eine WLAN- oder Bluetooth/BLE-Ortung. Die Bestimmung der Lage (Position und Orientierung) des Arbeitsgeräts 12 erfolgt über die Ermittlung von Laufzeitunterschieden des elektromagnetischen Funksignals zwischen dem Ortungsmodul 42 und dem Objektpunktmodulen 44a und 44b. Hierbei kann über Unterschiede in der Laufzeit der Funksignalpulse zwischen der Lageerfassungseinheit 38 und dem ersten Objektpunktmodul 44a im Unterschied zum zweiten Objektpunktmodul 44b durch Triangulation die Orientierung des Arbeitsgeräts 12 gegenüber einer Vorzugsrichtung, insbesondere einer Nordrichtung auf einer Bodenebene bestimmt werden. Für eine exakte Erfassung der Lage (Position) des Ortungsmoduls 42 werden ferner zwei separate Vermessungspunktmodule 46a und 46b beabstandet zu dem Ortungsmodul 42 vorgesehen, um über die Messung von Laufzeitunterschieden und Triangulation bei bekannter Lage der Vermessungspunktmodule 46a und 46b die Position des Ortungsmoduls 42 zu bestimmen. Somit kann durch die Lageerfassungseinheit 38 des Fernsteuerungssystems 10 gemäß dem Ausführungsbeispiel nach Fig. 4 hochpräzise durch Triangulation und Messung von Laufzeitunterschieden des Ultra Wide Band-Funksignals die Lagedaten (Orientierung und Position) des Arbeitsgeräts 12 bestimmt werden und an das Fernsteuerungsmodul 20 übertragen werden, damit das Fernsteuerungsmodul 20 die Lagedaten des selbstfahrenden Arbeitsgeräts 12 verarbeiten kann.

Für die Erfassung der Lagedaten des mobilen Endgeräts 14 kann entweder an dem mobilen Endgerät 14 ein Ortungstag oder Ortungsanhänger 48 fest mit dem mobilen Endgerät 14 verbunden werden (beispielsweise durch Ausgestaltung des Ortungsanhängers 48 als Smartphone-Hülle oder Tablet-Hülle). Es ist auch möglich, dass die Lagedaten des mobilen Endgeräts 14 von dem mobilen Endgerät 14 selbst erfasst (beispielsweise über einen internen Kompass oder eine Nordsuchervorrichtung sowie durch eine interne GPS-Ortungsvorrichtung) und an das Fernsteuerungsmodul 20 zur weiteren Verarbeitung übertragen werden. Eine Übertragung der Lagedaten des mobilen Endgeräts 14 von dem mobilen Endgerät 14 zu dem Fernsteuerungsmodul 20 ist jedoch nicht unbedingt notwendig, da von dem Fernsteuerungsmodul 20 zu dem mobilen Endgerät 14 als Lagedaten des Arbeitsgeräts 12 absolute geographische Koordinaten wie Längen- und Breitengrad sowie eine azimutale Orientierung alpha gegenüber Norden übertragen werden können, wobei das mobile Endgerät 14 dann die Verrechnung der relativen Lage (relative Orientierung und relative Position oder Abstand) selbst ermittelt.

Wie also in Bezug auf die Fig. 1 bis 4 dargelegt, können gemäß der Erfindung verschiedene Maschinen mit nur einer Fernbedienung, das als mobiles Endgerät 14 ausgestaltet ist und mit diversen wählbaren Steuerungsmöglichkeiten gesteuert werden. Hierbei können die Steuerungsmöglichkeiten jederzeit geändert werden. Dabei werden frei programmierbare Sendemodule (drahtlos wie WLAN, Bluetooth oder drahtgebunden) und frei programmierbare Empfangsmodule verwendet. Dabei weist das mobile Endgerät 14 eine Applikations-Software auf, die die Benutzeroberfläche 16 erzeugt, um Bewegungsdaten an das Fernsteuerungsmodul 20 zu senden, welches die Bewegungsdaten von dem mobilen Endgerät 14 in Fahrbefehlsdaten wandelt und an die interne Maschinensteuereinheit 18 des Arbeitsgeräts 12 schickt, um das Arbeitsgerät 12 fernzusteuern. Das Arbeitsgerät 12 schickt dabei über die Maschinensteuereinheit 18 Maschinenstatusdaten MSD an das Fernsteuerungsmodul 20 zurück, welches diese Maschinenstatusdaten MSD in ein entsprechendes Protokoll übersetzt und an das mobile Endgerät 14 übersendet. Hierfür ist auf dem Fernsteuerungsmodul 20 eine generische Hardware vorgesehen, auf welcher eine generische Software ausgebildet ist, die die Funktionen einer Empfangseinheit, einer Stromversorgung und der Datenverarbeitung übernimmt.

Im Folgenden werden nun noch die unterschiedlichen Steuerungsmöglichkeiten durch unterschiedliche Endgeräte für die fernsteuerbaren Maschinen oder Arbeitsgeräte 12 im Detail erläutert.

In den Fig. 5A bis 5C sind unterschiedliche Benutzeroberflächen 16 auf einem mobilen Endgerät 14 dargestellt, die unterschiedliche Bedienkonzepte oder Steuerungsverfahren illustrieren.

In Fig. 5A ist eine Benutzeroberfläche 16 auf einem mobilen Endgerät 14 dargestellt, welche eine übliche Steuerung für Rüttelplatten und Grabenwalzen auf dem mobilen Endgerät 14 virtualisiert, welche bei bekannten Fernsteuerungsvorrichtungen analog durch das Vorsehen von zwei "realen" Bedienhebeln verwirklicht ist. Bei dieser sogenannten "Panzersteuerung" werden zwei parallel nebeneinander liegende Hebel, die von dem Bediener manuell weg oder zu dem Bediener hin bewegt werden können, so bewegt, dass sie entsprechend der Hebelauslenkung eine Fahrgeschwindigkeit einer linken und rechten Antriebskette oder eines linken und rechten Antriebsrads steuern. Wenn also beide Hebel nach vorne bewegt werden, fährt die Maschine vorwärts, da die linke und rechte Kettengeschwindigkeit gleich ist und eine Vorwärtsbewegung verursacht. Wird der linke Hebel nach vorne und der rechte Hebel nach hinten bewegt, fährt die Maschine nach rechts. Wird der rechte Hebel nach vorne und der linke Hebel nach hinten bewegt, fährt die Maschine nach links.

Bei dem in Fig. 5A gezeigten Ausführungsbeispiel einer Benutzeroberfläche 16 des mobilen Endgeräts 14 sind nun diese Hebel virtuell auf einem Touchscreen abgebildet, wobei mit den Fingerspitzen entsprechende "virtuelle" Regler oder Bedienhebel mit einer Gleitbewegung der Fingerspitze auf dem Touchscreen eingestellt werden können. Diese Art der Steuerung benötigt grundsätzlich keine Lageinformation des mobilen Endgeräts 14 und/oder des Arbeitsgeräts 12, da sich bei dieser Steuerung der fernsteuernde Benutzer in das Fahrkoordinatensystem des Arbeitsgeräts 12 hineinversetzt, also quasi gedanklich auf dem Arbeitsgerät 12 sitzend in Fahrtrichtung blickt. Um jedoch die Fahrbefehlsdaten richtig in Maschinensteuerdaten umzusetzen, damit das Arbeitsgerät 12 sich entsprechend der verwendeten Panzersteuerung verhält, ist die Verarbeitungseinheit 26 dazu angepasst, von dem mobilen Endgerät 14 empfangene Fernsteuerungsdaten oder Maschinendaten zu verarbeiten und an das Arbeitsgerät 12 angepasste Maschinensteuerdaten zu diesen zu übertragen.

Gemäß der Erfindung kann jedoch nicht nur ein beliebiges mobiles Endgerät 14 zur Fernsteuerung des Arbeitsgeräts 12 verwendet werden, sondern die auf dem mobilen Endgerät 14 installierte Fernsteuerungssoftware kann einem fernsteuernden Benutzer abhängig vom Maschinentyp des Arbeitsgeräts 12 unterschiedliche Bedienkonzepte auf der Benutzeroberfläche 16 zur Auswahl geben. Die Verarbeitungseinheit 26 des Fernsteuerungsmoduls 20 kann also in Abhängigkeit von der Identität und/oder des Typs des mobilen Endgeräts 14 und/oder des selbstfahrenden Arbeitsgeräts 12 Kenndaten an das mobile Endgerät 14 senden, auf Basis dessen unterschiedliche vorbestimmte Benutzeroberflächen 16 auf dem mobilen Endgerät 14 bereitgestellt werden. Beispielsweise können hier als Kenndaten Daten verwendet werden, die den Typ des Arbeitsgeräts 12 eindeutig durch eine Typenbezeichnung oder durch eine Kennnummer kennzeichnen, wodurch die auf dem mobilen Endgerät 14 installierte Fernsteuerungssoftware aus einer entsprechenden Datenbank mögliche Bedienkonzepte auslesen kann, die einem entsprechenden Arbeitsgerätetyp in den Kenndaten zugeordnet sind.

In Fig. 5B ist solch ein weiteres Bedienkonzept gemäß einem anderen Ausführungsbeispiel einer Benutzeroberfläche 16 auf einem mobilen Endgerät 14 gezeigt. Bei dieser Benutzeroberfläche 16 erfolgt die Fernsteuerung des Arbeitsgeräts 12 durch das mobile Endgerät 14 auf Basis einer sogenannten "Minecraft-Steuerung". Bei einer solchen Art der Steuerung wird auf einem Touchscreen 32, 34 ein Startpunkt 50 dargestellt, auf welchem bei einer Fernsteuerung des Arbeitsgeräts 12 ein Finger F eines Benutzers gelegt wird. Wird die Fingerspitze auf dem Touchscreen 32, 34 in eine Richtung weg vom Startpunkt 50 bewegt, bewegt sich auch die Maschine in die jeweilige Richtung. Der Abstand der Fingerspitze auf dem Touchscreen 32, 34 von dem Startpunkt 50 definiert dabei die Fahrgeschwindigkeit des Arbeitsgeräts 12. Die Steuerung ist also ähnlich wie bei einem virtuellen Joystick, der in Draufsicht von oben auf eine virtuelle Touchscreen-Oberfläche abgebildet oder projiziert ist. Die Richtung der Auslenkung auf dem Touchscreen gibt also die Fahrtrichtung des Arbeitsgeräts 12 vor, während die Stärke der Auslenkung (d.h. Abstand vom Startpunkt 50) die Geschwindigkeit des Arbeitsgeräts 12 vorgibt.

Diese sogenannte Minecraft-Steuerung kann dabei ohne weitere Verarbeitung der Lagedaten des mobilen Endgeräts 14 und/oder des Arbeitsgeräts 12 verwendet werden, wobei hierfür die Benutzeroberfläche 16 immer in der gleichen Orientierung zu dem Benutzer gehalten werden sollte und ferner die Steuerung des Arbeitsgeräts 12 entsprechend dem bewegten Koordinatensystem des Arbeitsgeräts 12 erfolgt. Hierbei muss sich jedoch ein Benutzer gedanklich auf dem Arbeitsgerät 12 sitzend in Fahrtrichtung des Arbeitsgeräts 12 bewegen. Erfindungsgemäß bevorzugt ist daher eine richtungskompatible Steuerung des Arbeitsgeräts 12, wie im Folgenden beschrieben wird.

Bei dieser Art der Fernsteuerung werden die Lagedaten des mobilen Endgeräts 14 und des selbstfahrenden Arbeitsgeräts 12 so miteinander verrechnet, dass die aktuelle Orientierung des realen Arbeitsgeräts 12 mit der aktuellen Orientierung eines virtuellen Arbeitsgeräts 12v auf der Benutzeroberfläche 16 des mobilen Endgeräts 14 korreliert oder übereinstimmt. Obwohl zur Illustration des Steuerungsprinzips in Fig. 5B das virtuelle Arbeitsgerät 12v mit seinem Fahrtrichtungspfeil eingezeichnet ist, muss dies bei einer tatsächlichen Ausgestaltung einer Benutzeroberfläche 16 mit einer Minecraft-Steuerung nicht unbedingt der Fall sein. Es ist lediglich wichtig, dass eine relative Orientierung zwischen Endgerät 14 und Arbeitsgerät 12 ermittelbar ist, auf Basis dessen dann die Orientierung des virtuellen Arbeitsgeräts 12v innerhalb der Benutzeroberfläche 16 des mobilen Endgeräts 14 berechnet und gegebenenfalls in der Benutzeroberfläche 16 angezeigt werden kann.

Da die Fernsteuerung für selbstfahrende Arbeitsgeräte 12 auf Bodenfahrzeuge gerichtet ist, soll unter einer Orientierung des mobilen Endgeräts 14 und des Arbeitsgeräts 12 eine Orientierung innerhalb der Bodenebene der Erdoberfläche verstanden werden, beispielsweise eine azimutale Orientierung, bei welchem der Azimut den relativen Orientierungswinkel gegenüber Norden anzeigt. Für den Fall, dass das mobile Endgerät 14 nicht parallel zur Bodenfläche gehalten wird oder das Arbeitsgerät 12 sich in einer Hanglage befindet, soll unter der Orientierung des mobilen Endgeräts 14 und/oder des Arbeitsgeräts 12 die entsprechende vertikale Projektion auf eine gedachte plane Fläche oder Wasseroberfläche auf der Erdoberfläche verstanden werden. Die Verarbeitungseinheit 26 modifiziert also aufgrund der miteinander verrechneten Lagedaten des mobilen Endgeräts 14 und des selbstfahrenden Arbeitsgeräts 12 von dem mobilen Endgerät 14 empfangene Maschinensteuerdaten MCD in der Art, dass eine richtungskompatible Steuerung des Arbeitsgeräts 12 durch das Endgerät 14 ermöglicht wird. Hierbei muss lediglich die Orientierung von dem fernbedienenden mobilen Endgerät 14 und des Arbeitsgeräts 12 zueinander bestimmt werden, wie beispielsweise durch eine Kompassvorrichtung, durch die beschriebene UWB (Ultra Wide Band)-Ortung oder durch eine RTK (Real Time Kinematic)-Ortung.

Die richtungskompatible Steuerung hängt dabei zusätzlich von dem Typ des Arbeitsgeräts 12 ab. So kann beispielsweise bei einer technischen Zwangskopplung von Fahren und Drehen des Arbeitsgeräts 12 eine Mischform einer richtungskompatiblen Steuerung und einer Cockpitsteuerung (in welchen der Benutzer gedanklich auf der Maschine sitzend in Fahrtrichtung blickt) verwirklicht sein.

So kann beispielsweise bei einem ersten Fall, falls der Bediener während des gesamten Steuerungsprogramms das Bedienelement nicht freigibt, das Arbeitsgerät 12, wenn dessen Fahrtrichtung in Blickrichtung des Bedieners zeigt, zunächst vom Bediener wegfahren, falls der Bediener auf der Fernbedienung eine Bewegung nach vorne einstellt. Fährt der Bediener dann mit dem Arbeitsgerät 12 eine 180°-Kurve (die Front des Arbeitsgeräts 12 zeigt auf den Bediener zu) und lässt dabei die Steuerung nicht los, fährt das Arbeitsgerät 12 auf den Bediener zu, obwohl der Bediener nach wie vor eine Bewegung nach vorne eingestellt hat. Die Steuerung findet also innerhalb des Fahrkoordinatensystems des Arbeitsgeräts 12 gemäß einer Cockpitsteuerung statt.

In einem zweiten Fall kann jedoch der Bediener nach Vollenden der 180°-Kurve das Bedienelement loslassen. Durch den erneuten Steuerungsvorgang springt dann das System in eine richtungskompatible Steuerung zurück, wodurch bei einer Steuerung oder Bewegung nach vorne auf dem Touchscreen 32, 34 das Arbeitsgerät 12 nicht auf den Benutzer zufährt, sondern von ihm weg.

Bei anderen Arbeitsgeräten 12, wie beispielsweise einer 4Q-Rüttelplatte ist eine vollständige richtungskompatible Steuerung möglich, da dieses Gerät alle Bewegungsrichtungen und Drehrichtungen losgelöst voneinander ausführen kann. Hier gibt man über die Fernbedienung einen entsprechenden Bewegungsvektor vor, wie oben mit Bezug auf die Minecraft-Steuerung in Fig. 5B beschrieben, wobei die Maschine exakt diesem Bewegungsvektor folgt, unabhängig davon, wie sie relativ zum Bediener orientiert ist. Die Verarbeitungseinheit 26 verarbeitet also die Maschinensteuerdaten MCD des mobilen Endgeräts so, dass eine Bewegung eines Fingers F in einer Benutzeroberfläche 16 auf einem Touchscreen 32, 34 des Endgeräts 14 entsprechend einer Ein-Finger-Steuerung oder Minecraft-Steuerung in Fahrbefehlsdaten des Arbeitsgeräts 12 umgesetzt werden.

In Fig. 5C ist eine weitere Steuerungsmöglichkeit des Arbeitsgeräts 12 gezeigt, bei welchem keine Bedienung über einen Touchscreen 32, 34 erfolgen muss. Diese Steuerung ist gerade für den Einsatz bei einer Bautätigkeit bevorzugt, da ein mobiles Endgerät 14 wie beispielsweise ein Smartphone oder ein Tablet-PC vollständig umhüllt und vor Schmutz und Wasser geschützt werden kann, ohne dass auf den Touchscreen 32, 34 zugegriffen werden muss. Bei dieser Steuerung mittels einer Neige- und Kipp-Steuerung werden die Maschinensteuerdaten MCD von dem mobilen Endgerät 14 so verarbeitet, dass eine Bewegung des Endgeräts 14 im Raum entsprechend einer Neige- und Kipp-Steuerung in den Fahrbefehlsdaten des Arbeitsgeräts12 umgesetzt werden. Hierfür ist es jedoch notwendig, dass das mobile Endgerät 14 eine entsprechende Sensorik wie eine inertiale Messeinheit, kurz IMU (Inertial Measurement Unit) aufweist. Auf diese integrierte Lagesensorik kann dann von der Fernsteuerungssoftware auf dem mobilen Endgerät 14 zugegriffen werden, um entsprechende Steuerbefehle zu ermitteln. Die in Fig. 5C gezeigte Steuerungsmöglichkeit ist eine sehr intuitive Steuerung des Arbeitsgeräts 12, die, wie oben beschrieben, entweder teilweise richtungskompatibel oder vollständig richtungskompatibel betrieben werden kann, wobei ein nach vorne Neigen des mobilen Endgeräts 14 eine nach vorne Bewegung des Arbeitsgeräts 12, ein nach hinten Neigen des mobilen Endgeräts 14 eine nach hinten Bewegung, ein nach links Kippen des mobilen Endgeräts 14 eine nach links Bewegung des Arbeitsgeräts 12 und ein nach rechts Kippen des mobilen Endgeräts 14 eine nach rechts Bewegung des Arbeitsgeräts 12 erzeugt, wobei sämtliche Mischformen der Neige- und Kipp-Bewegung des mobilen Endgeräts 14 in entsprechende kombinierte Fahrbewegungen umgesetzt werden.

Die Verarbeitung der Lagedaten soll jedoch nicht nur auf die relative Orientierung des Arbeitsgeräts 12 und des mobilen Endgeräts 14 beschränkt sein, sondern es gibt noch weitere Anwendungsfälle, bei welchen die Fernsteuerung aufgrund der relativen Lagedaten beeinflusst werden kann. Die Verarbeitungseinheit 26 kann also ferner dazu angepasst sein, die Lagedaten des mobilen Endgeräts 14 und des selbstfahrenden Arbeitsgeräts 12 so miteinander zu verrechnen, das in Abhängigkeit der relativen Lage, insbesondere des Abstandes und/oder der relativen Orientierung zwischen Endgerät 14 und Arbeitsgerät 12 Maschinensteuerdaten MCD von dem Endgerät 14 modifiziert werden. So kann beispielsweise eine Modifikation der Maschinensteuerdaten MCD von dem Endgerät 14 darin bestehen, dass bei einem minimalen Sicherheitsabstand zwischen Bediener oder mobilen Endgerät 14 und Arbeitsgerät 12 ein Notstopp erfolgt. Es ist jedoch auch denkbar, dass bei einem maximalen Abstand zwischen mobilem Endgerät 14 und Arbeitsgerät 12 ebenfalls ein Stoppen der Maschine erzwungen wird, um zu verhindern, dass ein Bediener das Gerät in einem Abstand betätigt, wo er nicht mehr Kollisionen oder Unfälle mit Objekten oder Personen sicher ausschließen kann.

Es ist jedoch auch denkbar, dass die absolute Lage des Arbeitsgeräts 12 und/oder des mobilen Geräts 14 über die Möglichkeit einer Fernsteuerung entscheiden. So kann beispielsweise eine Bodenregion oder ein sogenannter Geofence, der einen bestimmtes Bodenbereich einer Erdoberfläche abdeckt, darüber entscheiden, ob das Arbeitsgerät 12 bedient werden darf. So kann beispielsweise festgelegt werden, dass das mobile Endgerät 14 sich innerhalb des festgelegten Bodenbereichs oder innerhalb des festgelegten Geofences befindet, um auszuschließen, dass eine unautorisierte Person, die sich nicht in dem Baustellengebiet (im definierten Geofence oder Bodenbereich) befindet, Maschinen unerlaubterweise fernsteuert. Auch kann damit verhindert werden, dass autorisierte Arbeiter bei einem Verlassen des Baugebietes (des festgelegten Bodenbereichs) aus Versehen Maschinen aktivieren. In ähnlicher Weise kann auch ein Geofence oder virtuelles Bodengebiet für das Arbeitsgerät 12 definiert werden, auf welchem eine Fernsteuerung und ein Fahren des Arbeitsgeräts 12 erlaubt ist. So kann beispielsweise verhindert werden, dass eine Grabenwalze oder eine Rüttelplatte in ein Gebiet fährt, in welchem gerade ein Bauschacht gegraben wird.

Ferner kann eine Modifikation der Maschinensteuerdaten MCD auch bedeuten, dass in festgelegten virtuellen Bodenbereichen oder Geofence-Bereichen unterschiedliche Fahrgeschwindigkeiten erlaubt sind. Schließlich kann auch in Abhängigkeit des Abstandes zwischen mobilem Endgerät 14 und Arbeitsgerät 12 graduell die erlaubte Fahrgeschwindigkeit reduziert werden, um die Sicherheit des ferngesteuerten Fahrbetriebs des Arbeitsgeräts 12 zu erhöhen. Somit kann also bei einem großen Abstand zwischen mobilem Endgerät 14 und Arbeitsgerät 12 nicht mehr so schnell gefahren werden, wie bei einem geringen Abstand zwischen mobilem Endgerät 14 oder Benutzer und Arbeitsgerät 12.

Zusammenfassend können also, wie in Fig. 6 gezeigt, diverse Maschinen oder Arbeitsgeräte 12a, 12b, 12c mit diversen Steuerungsmöglichkeiten mit nur einem mobilen Applikations- und Update-fähigen bedient/ferngesteuert werden. Somit ist eine einfache Updatefähigkeit des Systems und somit eine flexible Einsatzfähigkeit ermöglicht. Voraussetzung hierfür ist ein Applikations- und Updatefähiges mobiles Endgerät 14a, 14b, 14c wie beispielsweise ein Smartphone, ein Tablet-PC oder ein Laptop oder auch ein wie auch immer geartetes Endgerät mit diesen Eigenschaften. Durch die variable und somit adaptivfähigen Nutzerschnittstellen können also, wie in Fig. 6 gezeigt, unterschiedliche Endgeräte 14a, 14b, 14c über die Fernsteuerungssoftware auf dem Endgerät 14 mit unterschiedlichen Steuerungsmöglichkeiten oder Benutzeroberflächen 16a, 16b, 16c ausgestattet werden, um wiederum unterschiedliche fernsteuerbare Maschinen oder Arbeitsgeräte 12a, 12b, 12c unterschiedlichen Typs zu bedienen.

Durch die Steuerung der Software kann auch eine Richtungskompatibilität ermöglicht werden, das heißt, dass Maschine und Fernsteuerung die Ausrichtung zueinander erkennen, so dass ein Fahrbefehl "vorwärts" immer eine Bewegung vom Bediener weg auslöst, wohingegen "rückwärts" immer auf den Bediener zu bedeutet. Anders ausgedrückt, muss der Bediener nicht mehr berücksichtigen, in welche Richtung die Maschine ausgerichtet ist, um dann gegebenenfalls spiegelverkehrte Steuereingaben zu machen. Die Steuerung bzw. Software setzt die Steuersignale immer so um, wie sie aus Sicht des Bedieners anzuwenden sind. Dabei wird die erfindungsgemäße Lösung vorzugsweise durch das Fernsteuerungsmodul 20 auf dem Arbeitsgerät 12 ermöglicht. Daher ist es denkbar, auch ältere Maschinen mit einem Fernsteuerungsmodul 20 zu versehen, um die Fernsteuerung des Arbeitsgeräts 12 nachzurüsten (Retrofit).

Bei dem drahtlosen Kommunikationssystem, wie mit Bezug auf die Fig. 1 bis 6 beschrieben, erfolgt also eine Steuerung einer Maschine mit Hilfe von Sensorik eines mobilen "App- und Update-fähigen" Endgeräts 14a, 14b, 14c (z.B. Smartphone, Tablet, Laptop oder ähnliches), wobei frei wählbare Bedienkonzepte oder Benutzeroberflächen 16a, 16b, 16c wie beispielsweise Zwei-Finger-Steuerung ("Panzersteuerung"), eine Ein-Finger-Steuerung ("Minecraft-Steuerung") oder eine Neige- und Kipp-Steuerung ("IMU-Steuerung") ermöglicht ist. Hierbei kann entweder eine vollständig richtungskompatible Steuerung oder eine teilweise richtungskompatible Steuerung (Zurückspringen in eine Richtungskompatibilität nach Loslassen oder Freigeben durch einen Benutzer) ermöglicht sein. Mit nur einer Fernsteuerung können also verschiedenen Maschinen bedient werden, wobei eine Nachrüstung oder ein Retrofit möglich ist. Somit kann also auch das Fernsteuerungsmodul 20 als Zubehör für beliebige fernbedienbare Baumaschinen eingesetzt werden. Ferner hat das Fernsteuerungssystem 10 gemäß der Erfindung den großen Vorteil, dass Bedienung und Abfrage von Maschinenstatusdaten innerhalb einer gleichen Benutzeroberfläche 16 erfolgt.

## Patentansprüche

1. Fernsteuerungsmodul (20) für ein selbstfahrendes Arbeitsgerät (12), mit
- einer Endgerät-Datenschnittstelle (22) zum Austausch von Daten mit einem mobilen Endgerät (14) über ein für den Endgerätetyp spezifisches Endgerät-Datenprotokoll;
- einer Arbeitsgerät-Datenschnittstelle (24) zum Austausch von Daten mit dem Arbeitsgerät (12) über ein für den Arbeitsgerätetyp spezifisches Arbeitsgerät-Datenprotokoll; und mit
- einer Verarbeitungseinheit (26), die dazu angepasst ist,
-- bei einer Kopplung des mobilen Endgeräts (14) mit dem selbstfahrenden Arbeitsgerät (12) die Identität und den Typ des Endgeräts (14) sowie die Identität und den Typ des Arbeitsgeräts (12) über die jeweilige Datenschnittstelle (22, 24) zu ermitteln oder aus einem Datenspeicher (28) abzurufen,
-- bei einem Datenaustausch zwischen Endgerät (14) und Arbeitsgerät (12) die jeweiligen Datenprotokolle wechselseitig zu übersetzen, und
-- von dem Endgerät (14) zu dem Arbeitsgerät (12) Maschinensteuerdaten (MCD) und von dem Arbeitsgerät (12) zu dem Endgerät (14) Maschinenstatusdaten (MSD) zu übertragen,
**dadurch gekennzeichnet, dass** die Verarbeitungseinheit (26) in Abhängigkeit von der Identität und/oder des Typs des Endgeräts (14) und/oder des Arbeitsgeräts (12) Kenndaten an das mobile Endgerät (14) sendet, auf Basis dessen unterschiedliche vorbestimmte Benutzeroberflächen (16) auf dem mobilen Endgerät (14) bereitgestellt werden.

2. Fernsteuerungsmodul (20) nach Anspruch 1, **dadurch gekennzeichnet, dass** die Verarbeitungseinheit (26) dazu angepasst ist, von dem Endgerät (14) empfangene Maschinensteuerdaten (MCD) zu verarbeiten und an das Arbeitsgerät (12) angepasste Maschinensteuerdaten (MCD) zu dem Arbeitsgerät (12) zu übertragen.

3. Fernsteuerungsmodul (20) nach einem der vorstehenden Ansprüche, **dadurch gekennzeichnet, dass** die Verarbeitungseinheit (26) dazu angepasst ist, Lagedaten des mobilen Endgeräts (14) und des selbstfahrenden Arbeitsgeräts (12) so miteinander zu verrechnen, dass die aktuelle Orientierung des realen Arbeitsgeräts (12) mit der aktuellen Orientierung des virtuellen Arbeitsgeräts (12) auf einer Benutzeroberfläche (16) des mobilen Endgeräts (14) korreliert.

4. Fernsteuerungsmodul (20) nach Anspruch 3, **dadurch gekennzeichnet, dass** die Verarbeitungseinheit (26) aufgrund der miteinander verrechneten Lagedaten des mobilen Endgeräts (14) und des selbstfahrenden Arbeitsgeräts (12) von dem mobilen Endgerät (14) empfangene Maschinensteuerdaten (MCD) so modifiziert, dass eine richtungskompatible Steuerung des Arbeitsgeräts (12) durch das Endgerät (14) ermöglicht wird.

5. Fernsteuerungsmodul (20) nach Anspruch 4, **dadurch gekennzeichnet, dass** die Verarbeitungseinheit (26) Maschinensteuerdaten (MCD) des Endgeräts (14) so verarbeitet, dass eine Bewegung des Endgeräts (14) im Raum entsprechend einer Neige- und Kipp-Steuerung in Fahrbefehlsdaten des Arbeitsgeräts (12) umgesetzt werden.

6. Fernsteuerungsmodul (20) nach Anspruch 4, **dadurch gekennzeichnet, dass** die Verarbeitungseinheit (26) Maschinensteuerdaten (MCD) des Endgeräts (14) so verarbeitet, dass eine Bewegung eines Fingers (F) in einer Benutzeroberfläche (16) auf einem Touchscreen (32, 34) des Endgeräts (14) entsprechend einer Ein-Finger-Steuerung in Fahrbefehlsdaten des Arbeitsgeräts (12) umgesetzt werden.

7. Fernsteuerungsmodul (20) nach einem der vorstehenden Ansprüche, **dadurch gekennzeichnet, dass** die Verarbeitungseinheit (26) dazu angepasst ist, Lagedaten des mobilen Endgeräts (14) und des selbstfahrenden Arbeitsgeräts (12) so miteinander zu verrechnen, dass in Abhängigkeit der relativen Lage, insbesondere des Abstandes und/oder der relativen Orientierung zwischen Endgerät (14) und Arbeitsgerät (12) Maschinensteuerdaten (MCD) von dem Endgerät (14) modifiziert werden.

8. Selbstfahrendes Arbeitsgerät (12), mit
- einer Arbeitsmaschineneinheit (36) zur Durchführung einer Arbeitstätigkeit;
- einer internen Maschinensteuerungseinheit (18) zur Steuerung der Arbeitsmaschineneinheit (36) mittels Maschinensteuerdaten (MCD) und zum Ermitteln von Maschinenstatusdaten (MSD) der Arbeitsmaschineneinheit (36); und
- einem Fernsteuerungsmodul (20) gemäß einem der Ansprüche 1 bis 5.

9. Fernsteuerungssystem (10) für ein selbstfahrendes Arbeitsgerät (12), mit
- einem mobilen Endgerät (14) mit einer Benutzeroberfläche (16) zur Darstellung von Maschinenstatusdaten (MSD) sowie zur Eingabe von Maschinensteuerdaten (MCD);
- einem selbstfahrenden Arbeitsgerät (12) mit einer internen Maschinensteuerungseinheit (18) zum Empfangen von Maschinensteuerdaten (MCD) und zum Senden von Maschinenstatusdaten (MSD); und
- einem Fernsteuerungsmodul (20) nach einem der Ansprüche 1 bis 5.

10. Fernsteuerungssystem (10) nach Anspruch 9, mit
- einer Lageerfassungseinheit (38) zur Bestimmung der räumlichen Lage (x, y, alpha) des selbstfahrenden Arbeitsgeräts (12), wobei die Lageerfassungseinheit (38) dazu angepasst ist, Lagedaten (LD) des selbstfahrenden Arbeitsgeräts (12) und/oder des mobilen Endgeräts (14) an das Fernsteuerungsmodul (20) zu übermitteln.

11. Verfahren zum Fernsteuern eines selbstfahrenden Arbeitsgeräts (12) durch ein mobiles Endgerät (14), mit den Schritten:
- Bereitstellen (S100) einer Endgerät-Datenschnittstelle (22) zum Austausch von Daten mit dem mobilen Endgerät (14) über ein für den Endgerätetyp spezifisches Endgerät-Datenprotokoll;
- Bereitstellen (S110) einer Arbeitsgerät-Datenschnittstelle (24) zum Austausch von Daten mit dem Arbeitsgerät (12) über ein für den Arbeitsgerätetyp spezifisches Arbeitsgerät-Datenprotokoll;
- Koppeln (S120) des mobilen Endgeräts (14) mit dem selbstfahrenden Arbeitsgerät (12);
- Ermitteln (S130) der Identität und des Typs des Endgeräts (14) sowie der Identität und des Typs des Arbeitsgeräts (12) über die jeweilige Datenschnittstelle oder Abrufen aus einem Datenspeicher (28);
- wechselseitiges Übersetzen (S140) der jeweiligen Datenprotokolle bei einem Datenaustausch zwischen Endgerät (14) und Arbeitsgerät (12); und
- Übertragen (S150) von Maschinensteuerdaten (MCD) von dem Endgerät (14) zu dem Arbeitsgerät (12) und von Maschinenstatusdaten (MSD) von dem Arbeitsgerät (12) zu dem Endgerät (14),
**dadurch gekennzeichnet, dass** in Abhängigkeit von der Identität und/oder des Typs des Endgeräts (14) und/oder des Arbeitsgeräts (12) Kenndaten an das mobile Endgerät (14) gesendet werden, auf Basis dessen unterschiedliche vorbestimmte Benutzeroberflächen (16) auf dem mobilen Endgerät (14) bereitgestellt werden.

12. Computerprogramm umfassend Befehle, die bei der Ausführung des Programms durch ein mobiles Endgerät (14) und/oder ein Fernsteuerungsmodul (20) dieses veranlassen, das Verfahren nach Anspruch 11 auszuführen.

13. Computerlesbares Medium, umfassend Befehle, die bei der Ausführung durch ein mobiles Endgerät (14) und/oder ein Fernsteuerungsmodul (20) dieses veranlassen, das Verfahren nach Anspruch 11 auszuführen.

14. Vorrichtung zur Datenverarbeitung, umfassend Mittel zur Ausführung des Verfahrens nach Anspruch 11.

## Claims

1. Remote control module (20) for a self-propelled working device (12), comprising
- a terminal data interface (22) for exchanging data with a mobile terminal (14) via a terminal data protocol specific to the terminal type;
- a working device data interface (24) for exchanging data with the working device (12) via a working device data protocol specific to the working device type; and comprising
- a processing unit (26) which is adapted
- to determine - when the mobile terminal (14) is coupled to the self-propelled working device (12) - the identity and type of the terminal (14) as well as the identity and type of the working device (12) via the respective data interface (22, 24) or to retrieve same from a data memory (26),
- to reciprocally translate the respective data protocols during exchange of data between the terminal (14) and the working device (12), and
- to transmit machine control data (MCD) from the terminal (14) to the working device (12) and to transmit machine status data (MSD) from the working device (12) to the terminal (14),
**characterised in that**, in dependence upon the identity and/or type of the terminal (14) and/or of the working device (12), the processing unit (26) transmits characteristic data to the mobile terminal (14), on the basis of which different predetermined user interfaces (16) are provided on the mobile terminal (14).

2. Remote control module (20) as claimed in claim 1, **characterised in that** the processing unit (26) is adapted to process machine control data (MCD) received from the terminal (14) and to transmit machine control data (MCD), which are adapted to the working device (12), to the working device (12).

3. Remote control module (20) as claimed in any one of the preceding claims, **characterised in that** the processing unit (26) is adapted to offset position data of the mobile terminal (14) and of the self-propelled working device (12) against one another such that the current orientation of the real working device (12) correlates with the current orientation of the virtual working device (12) on a user interface (16) of the mobile terminal (14).

4. Remote control module (20) as claimed in claim 3, **characterised in that** the processing unit (26) modifies machine control data (MCD), which are received from the mobile terminal (14), on the basis of the mutually offset position data of the mobile terminal (14) and of the self-propelled working device (12), such that direction-compatible control of the working device (12) by means of the terminal (14) is enabled.

5. Remote control module (20) as claimed in claim 4, **characterised in that** the processing unit (26) processes machine control data (MCD) of the terminal (14) such that a movement of the terminal (14) in space is converted according to inclination and tilt control into travel command data of the working device (12).

6. Remote control module (20) as claimed in claim 4, **characterised in that** the processing unit (26) processes machine control data (MCD) of the terminal (14) such that a movement of a finger (F) in a user interface (16) on a touchscreen (32, 34) of the terminal (14) is converted according to single-finger control into travel command data of the working device (12).

7. Remote control module (20) as claimed any one of the preceding claims, **characterised in that** the processing unit (26) is adapted to offset position data of the mobile terminal (14) and of the self-propelled working device (12) against one another such that machine control data (MCD) from the terminal (14) are modified in dependence upon the relative position, in particular the distance and/or the relative orientation between the terminal (14) and the working device (12).

8. Self-propelled working device (12), comprising
- a working machine unit (36) for performing a work activity;
- an internal machine control unit (18) for controlling the working machine unit (36) by means of machine control data (MCD) and for determining machine status data (MSD) of the working machine unit (36); and
- a remote control module (20) as claimed in any one of claims 1 to 5.

9. Remote control system (10) for a self-propelled working device (12), comprising
- a mobile terminal (14) with a user interface (16) for displaying machine status data (MSD) as well as for inputting machine control data (MCD);
- a self-propelled working device (12) with an internal machine control unit (18) for receiving machine control data (MCD) and for transmitting machine status data (MSD); and
- a remote control module (20) as claimed in any one of claims 1 to 5.

10. Remote control system (10) as claimed in claim 9, comprising
- a position detection unit (38) for determining the spatial position (x, y, alpha) of the self-propelled working device (12), wherein the position detection unit (38) is adapted to communicate position data (LD) of the self-propelled working device (12) and/or of the mobile terminal (14) to the remote control module (20).

11. Method for remotely controlling a self-propelled working device (12) by means of a mobile terminal (14), comprising the steps of:
- providing (S100) a terminal data interface (22) for exchanging data with the mobile terminal (14) via a terminal data protocol specific to the terminal type;
- providing (S110) a working device data interface (24) for exchanging data with the working device (12) via a working device data protocol specific to the working device type;
- coupling (S120) the mobile terminal (14) to the self-propelled working device (12);
- determining (S130) the identity and type of the terminal (14) as well as the identity and type of the working device (12) via the respective data interface or retrieving same from a data memory (26);
- reciprocally translating (S140) the respective data protocols during exchange of data between the terminal (14) and the working device (12); and
- transmitting (S150) machine control data (MCD) from the terminal (14) to the working device (12), and machine status data (MSD) from the working device (12) to the terminal (14),
**characterised in that**, in dependence upon the identity and/or type of the terminal (14) and/or of the working device (12), characteristic data are transmitted to the mobile terminal (14), on the basis of which different predetermined user interfaces (16) are provided on the mobile terminal (14).

12. Computer program comprising commands which, when the program is executed by a mobile terminal (14) and/or a remote control module (20), cause said terminal and/or said module to carry out the method as claimed in claim 11.

13. Computer-readable medium, comprising commands which, when executed by a mobile terminal (14) and/or a remote control module (20), cause said terminal and/or said module to carry out the method as claimed in claim 11.

14. Apparatus for data processing, comprising means for carrying out the method as claimed in claim 11.

## Revendications

1. Module de télécommande (20) pour un engin de travail automoteur (12), avec :
- une interface de données de terminal (22) pour l'échange de données avec un terminal mobile (14) via un protocole de données de terminal spécifique au type de terminal ;
- une interface de données d'engin de travail (24) pour l'échange de données avec l'engin de travail (12) via un protocole de données d'engin de travail spécifique au type d'engin de travail ; et
- une unité de traitement (26), qui est conçue pour :
- déterminer ou récupérer, lors d'un couplage du terminal mobile (14) avec l'engin de travail automoteur (12), à partir d'une mémoire de données (28), l'identité et le type du terminal (14) ainsi que l'identité et le type de l'engin de travail (12) via l'interface de données respective (22, 24) ;
- traduire réciproquement, lors d'un échange de données entre le terminal (14) et l'engin de travail (12), les protocoles de données respectifs ; et
- transmettre des données de commande de machine (MCD) du terminal (14) à l'engin de travail (12) et des données d'état de machine (MSD) de l'engin de travail (12) au terminal (14),
**caractérisé en ce que** l'unité de traitement (26) envoie des données caractéristiques au terminal mobile (14) en fonction de l'identité et/ou du type du terminal (14) et/ou de l'engin de travail (12), sur la base desquelles différentes interfaces utilisateur (16) prédéterminées sont fournies sur le terminal mobile (14).

2. Module de télécommande (20) selon la revendication 1, **caractérisé en ce que** l'unité de traitement (26) est conçue pour traiter les données de commande de machine (MCD) reçues du terminal (14) et pour transmettre à l'engin de travail (12) des données de commande de machine (MCD) conçues à l'engin de travail (12).

3. Module de télécommande (20) selon l'une des revendications précédentes, **caractérisé en ce que** l'unité de traitement (26) est conçue pour calculer ensemble les données de position du terminal mobile (14) et de l'engin de travail automoteur (12) de manière à ce que l'orientation actuelle de l'engin de travail réel (12) soit corrélée avec l'orientation actuelle de l'engin de travail virtuel (12) sur une interface utilisateur (16) du terminal mobile (14).

4. Module de télécommande (20) selon la revendication 3, **caractérisé en ce que** l'unité de traitement (26) modifie les données de commande de machine (MCD) reçues du terminal mobile (14) sur la base des données de position calculées ensemble du terminal mobile (14) et de l'engin de travail automoteur (12), de manière à permettre une commande de l'engin de travail (12) compatible avec la direction par le terminal (14).

5. Module de télécommande (20) selon la revendication 4, **caractérisé en ce que** l'unité de traitement (26) traite les données de commande de machine (MCD) du terminal (14) de manière à ce qu'un mouvement du terminal (14) dans l'espace, correspondant à une commande d'inclinaison et de basculement, soit converti en données de commande de déplacement de l'engin de travail (12).

6. Module de télécommande (20) selon la revendication 4, **caractérisé en ce que** l'unité de traitement (26) traite les données de commande de machine (MCD) du terminal (14) de manière à ce qu'un mouvement d'un doigt (F) sur une interface utilisateur (16) sur un écran tactile (32, 34) du terminal (14), correspondant à une commande à un seul doigt, soit converti en données de commande de déplacement de l'engin de travail (12).

7. Module de télécommande (20) selon l'une des revendications précédentes, **caractérisé en ce que** l'unité de traitement (26) est conçue pour calculer ensemble les données de position du terminal mobile (14) et de l'engin de travail automoteur (12) de manière à ce que les données de commande de machine (MCD) du terminal (14) soient modifiées en fonction de la position relative, en particulier de la distance et/ou de l'orientation relative entre le terminal (14) et l'engin de travail (12).

8. Engin de travail automoteur (12), avec :
- une unité de machine de travail (36) pour l'exécution d'une activité de travail ;
- une unité de commande de machine interne (18) pour la commande de l'unité de machine de travail (36) au moyen de données de commande de machine (MCD) et pour la détermination de données d'état de machine (MSD) de l'unité de machine de travail (36) ; et
- un module de télécommande (20) conforme à l'une des revendications 1 à 5.

9. Système de télécommande (10) pour un engin de travail automoteur (12), avec :
- un terminal mobile (14) avec une interface utilisateur (16) pour l'affichage de données d'état de machine (MSD) ainsi que pour la saisie de données de commande de machine (MCD) ;
- un engin de travail automoteur (12) avec une unité de commande de machine interne (18) pour la réception de données de commande de machine (MCD) et pour l'envoi de données d'état de machine (MSD) ; et
- un module de télécommande (20) selon l'une des revendications 1 à 5.

10. Système de télécommande (10) selon la revendication 9, avec :
- une unité de détection de position (38) pour la détermination de la position spatiale (x, y, alpha) de l'engin de travail automoteur (12), l'unité de détection de position (38) étant conçue pour transmettre des données de position (LD) de l'engin de travail automoteur (12) et/ou du terminal mobile (14) au module de télécommande (20).

11. Procédé de télécommande d'un engin de travail automoteur (12) par un terminal mobile (14), comprenant les étapes suivantes :
- mise à disposition (S100) d'une interface de données de terminal (22) pour l'échange de données avec le terminal mobile (14) via un protocole de données de terminal spécifique au type de terminal ;
- mise à disposition (S110) d'une interface de données d'engin de travail (24) pour l'échange de données avec l'engin de travail (12) via un protocole de données d'engin de travail spécifique au type d'engin de travail ;
- couplage (S120) du terminal mobile (14) avec l'engin de travail automoteur (12) ;
- détermination (S130) de l'identité et du type du terminal (14) ainsi que de l'identité et du type de l'engin de travail (12) via l'interface de données respective ou récupération à partir d'une mémoire de données (28) ;
- traduction réciproque (S140) des protocoles de données respectifs lors d'un échange de données entre le terminal (14) et l'engin de travail (12) ; et
- transmission (S150) de données de commande de machine (MCD) du terminal (14) à l'engin de travail (12) et de données d'état de machine (MSD) de l'engin de travail (12) au terminal (14),
**caractérisé en ce que** des données caractéristiques sont envoyées au terminal mobile (14) en fonction de l'identité et/ou du type du terminal (14) et/ou de l'engin de travail (12), sur la base desquelles différentes interfaces utilisateur (16) prédéterminées sont fournies sur le terminal mobile (14).

12. Programme informatique comprenant des instructions qui, lors de l'exécution du programme par un terminal mobile (14) et/ou un module de télécommande (20), font en sorte que ceux-ci exécutent le procédé selon la revendication 11.

13. Support lisible par ordinateur comprenant des instructions qui, lors de l'exécution par un terminal mobile (14) et/ou un module de télécommande (20), font en sorte que ceux-ci exécutent le procédé selon la revendication 11.

14. Dispositif de traitement de données, comprenant des moyens pour l'exécution du procédé selon la revendication 11.
